# EUROPEAN PATENT APPLICATION

(11) **EP 2 719 902 A1**
(43) Date of publication of application: **16.04.2014**
(21) Application number: 11867261.7
(22) Date of filing: 09.06.2011
(51) Int. Cl.: F15B 13/02, E02F 9/22, F15B 13/043, F15B 13/044

(54) **HYDRAULIC SYSTEM FOR CONSTRUCTION MACHINERY**

(71) Applicant: Volvo Construction Equipment AB, 631 85 Eskilstuna (SE)
(72) Inventor: BAE, Sang-Ki, Changwon-si Gyeongsangnam-do 642-770 (KR); LEE, Jae-Hoon, Changwon-si Gyeongsangnam-do 642-091 (KR)
(74) Representative: Zimmermann, Tankred Klaus
(86) International application number: PCT/KR2011/004235
(87) International publication number: WO 2012/169676

(57) **Abstract**

A hydraulic system for a construction machine is disclosed, which can prevent off-course travel of the machine when a combined operation of a traveling device and a working device such as a boom is performed. The hydraulic system for a construction machine includes first and second hydraulic pumps, left and right traveling operation levers and actuator operation levers for first and second working devices, a left traveling motor connected to a discharge flow path of the first hydraulic pump and an actuator for the first working device, a right traveling motor connected to a discharge flow path of the second hydraulic pump and an actuator for the second working device, a first pressure compensated valve installed on one side of an upper stream and a downstream of the first control valve, a second pressure compensated valve installed on one side of an upper stream and a downstream of the second control valve, a third pressure compensated valve, a fourth pressure compensated valve installed on one side of an upper stream and a downstream of the fourth control valve, a first orifice connected to the first pressure compensated valve of the first control valve, a first load sensing line connected to the fourth pressure compensated valve of the fourth control valve, and a hydraulic tank, a second orifice connected to the second pressure compensated valve of the second control valve, a second load sensing line connected to the third pressure compensated valve of the third control valve, and the hydraulic tank, a confluence valve installed in a confluence flow path of the first and second hydraulic pumps, a traveling communication valve installed in a flow path connecting the downstream of the left traveling first pressure compensated valve to the downstream of the right traveling third pressure compensated valve, and a controller controlling communication of the traveling communication valve when a combined operation for simultaneously operating the traveling device and the working device is performed.

## Description

### TECHNICAL FIELD

The present invention relates to a HYDRAULIC system for construction machinery. More particularly, the present invention relates to a hydraulic system for a construction machine, which can prevent off-course travel of the machine through distribution supply of a discharge flow rate of a hydraulic pump when a combined operation of a traveling device and a working device such as a boom is performed, and thus can improve operability.

### BACKGROUND ART

Generally, in the case of operating a working device, such as a boom or an arm, in a hydraulic system for a construction machine, such as an excavator, having two or more hydraulic pumps, hydraulic fluid from the two hydraulic pumps is simultaneously supplied to the boom or the arm through a confluence valve that is controlled in accordance with an operation amount of an operation lever by a user in order to heighten work efficiency through securing of an operation speed of the working device.

On the other hand, in the case of traveling, a left traveling device or a right traveling device is driven by the hydraulic fluid supplied from the respective hydraulic pumps. In this case, when a combined operation, in which the traveling device and the working device, such as the boom, are finely operated, is performed, for example, to move a heavy earthen pipe, it is required for the machine to travel in a straight line.

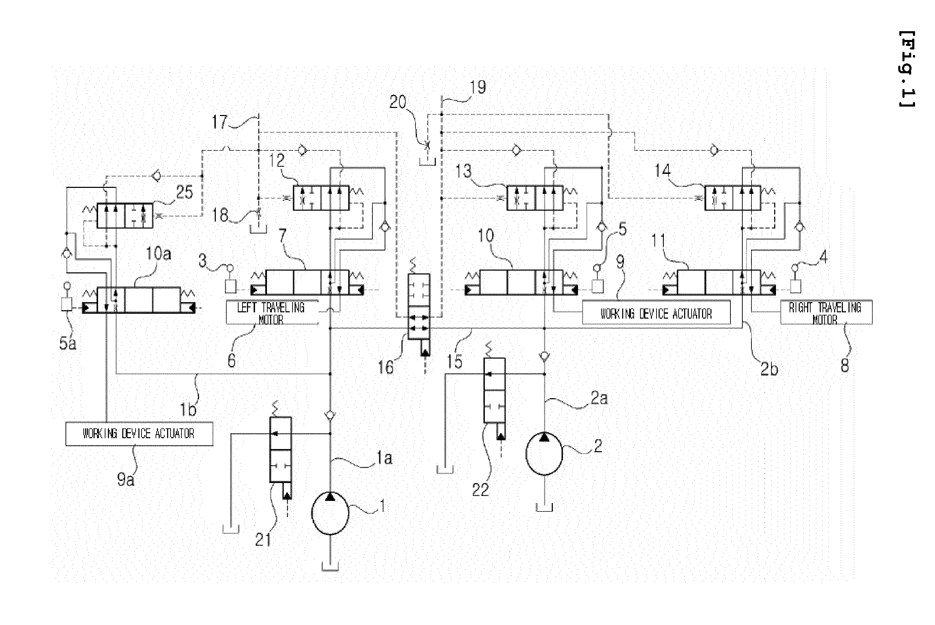

A hydraulic system for a construction machine in the related art, as illustrated in Fig. 1, includes first and second hydraulic pumps 1 and 2 connected to an engine (not illustrated); a left traveling operation lever 3, a right traveling operation lever 4, and actuator operation levers 5 and 5a for first and second working devices outputting an operation signal in proportion to an operation amount by an operator; a left traveling motor 6 connected to a discharge flow path 1a of the first hydraulic pump 1 to be driven by an operation of the left traveling operation lever 3; a first control valve (a spool for the left traveling motor) 7 installed in the discharge flow path 1a of the first hydraulic pump 1 and shifted to control start, stop, and direction change of the left traveling motor 6 in response to the operation of the left traveling operation lever 3; a right traveling motor 8 connected to a flow path 2b that is branched from a discharge flow path 2a of the second hydraulic pump 2 to be driven by an operation of the right traveling operation lever 4; a hydraulic actuator (arm cylinder or the like) 9a for the working device connected to a flow path 1b that is branched from the discharge flow path 1a of the first hydraulic pump 1 to be driven by an operation of the actuator operation lever 5a for the first working device; a hydraulic actuator (boom cylinder or the like) 9 for the working device connected to the discharge flow path 2a of the second hydraulic pump 2 to be driven by an operation of the actuator operation lever 5 for the second working device; a second control valve (a spool for the hydraulic actuator) 10 installed in the discharge flow path 2a of the second hydraulic pump 2 and shifted to control start, stop, and direction change of the hydraulic actuator 9 in response to the operation of the operation lever 5 for the second working device; a third control valve (a spool for the right traveling motor) 11 installed in a flow path 2b that is branched from the discharge flow path 2a of the second hydraulic pump 2 and shifted to control start, stop, and direction change of the right traveling motor 8 in response to the operation of the right traveling operation lever 4; a fourth control valve (a spool for the hydraulic actuator) 10a installed in the flow path 1b that is branched from the discharge flow path 1a of the first hydraulic pump 1 and shifted to control start, stop, and direction change of the hydraulic actuator 9a in response to the operation of the operation lever 5a for the first working device; a first pressure compensated valve 12 which is installed on a downstream side of the first control valve 7 and of which an opening amount is controlled according to a difference between a maximum load sensing pressure of the actuator (e.g., left traveling motor) connected to the first hydraulic pump 1 and a pressure of the discharge flow path 1a; a second pressure compensated valve 13 which is installed on a downstream side of the second control valve 10 and of which an opening amount is controlled according to a difference between the maximum load sensing pressure of the actuator (e.g., boom cylinder) connected to the second hydraulic pump 2 and a pressure of the discharge flow path 2a; a third pressure compensated valve 14 which is installed on a downstream side of the third control valve 11 and of which an opening amount is controlled according to the difference between the maximum load sensing pressure of the actuator (e.g., right traveling motor) connected to the second hydraulic pump 2 and the pressure of the discharge flow path 2a; a fourth pressure compensated valve 25 which is installed on a downstream side of the fourth control valve 10a and of which an opening amount is controlled according to the difference between the maximum load sensing pressure of the actuator (e.g., arm cylinder) connected to the first hydraulic pump 1 and the pressure of the discharge flow path 1a; a first orifice 18 connected to the first pressure compensated valve 12 of the first control valve 7, a first load sensing line 17 connected to the fourth pressure compensated valve 25 of the fourth control valve 10a, and a hydraulic tank; a second orifice 20 connected to the second pressure compensated valve 13 of the second control valve 10, a second load sensing line 19 connected to the third pressure compensated valve 14 of the third control valve 11, and the hydraulic tank; and a confluence valve 16 which is installed in a confluence flow path 15 that connects the discharge flow paths 1a and 2a of the first and second hydraulic pumps 1 and 2 in parallel, of which an opening amount is controlled according to operation amounts of the traveling operation levers 3 and 4 or the actuator operation levers 5 and 5a for the first and second working devices, which sums discharge flow rates of the first and second hydraulic pumps 1 and 2, and which makes the first load sensing line 17 and the second load sensing line 19 communicate with each other.

In the drawing, the reference numeral 21 denotes a bypass valve which is installed in a flow path that is branched from the uppermost stream side of the discharge flow path 1a of the first hydraulic pump 1 to prevent pressure of the first hydraulic pump 1 from being increased through bypassing of the discharge flow rate of the first hydraulic pump 1 to the hydraulic tank when the first control valve 7 or the fourth control valve 10a is in a neutral state, and the reference numeral 22 denotes a bypass valve which is installed in a flow path that is branched from the uppermost stream side of the discharge flow path 2a of the second hydraulic pump 2 to prevent pressure of the second hydraulic pump 2 from being increased through bypassing of the discharge flow rate of the second hydraulic pump 2 to the hydraulic tank when the second control valve 10 or the third control valve 11 is in a neutral state.

In the case of a combined operation, in which the left and right traveling operation levers 3 and 4 and the operation levers 5 and 5a for the first and second working devices are simultaneously operated, in an excavator that adopts the load sensing valves including the first to fourth pressure compensated valves 12, 13, 14, and 25 and the confluence valve 16, the discharge flow rates of the first and second hydraulic pumps 1 and 2 are determined depending on the work conditions according to the driving of the traveling device and the working device.

That is, the discharge flow rate of the first hydraulic pump 1 is supplied to the left traveling motor 6 and the working device (that is driven when the operation lever 5a of the first working device connected to the first hydraulic pump is operated), such as the arm, and the discharge flow rate of the second hydraulic pump 2 is supplied to the right traveling motor 8 and the working device (that is driven when the operation lever 5 of the second working device connected to the second hydraulic pump is operated), such as the boom, at the same time.

Further, in accordance with the maximum load pressure of the working device, the first to fourth pressure compensated valves 12, 13, 14, and 25 operate to supply constant flow rates. Further, since the first load sensing line 17 is connected to the hydraulic tank through the orifice 18 and the second load sensing line 19 is connected to the hydraulic tank through the orifice 19, the load sensing pressure is lowered in the neutral state thereof.

On the other hand, when the combined operation of the traveling device and the working device, such as the boom, is performed, the hydraulic fluid from the first and second load sensing lines 17 and 19 flows through the first and second orifices 18 and 20 connected to the hydraulic tank to cause the occurrence of a pressure loss, and there occurs a difference between load sensing pressures that act on the first and third pressure compensated valves 12 and 14 of the traveling device.

Accordingly, when the combined operation of the traveling device and the working device, such as the boom, is performed, the hydraulic fluid is not equally supplied to the left traveling motor 6 and the right traveling motor 8, and this cause the occurrence of off-course travel of the machine.

### DISCLOSURE

### TECHNICAL PROBLEM

Therefore, the present invention has been made to solve the above-mentioned problems occurring in the related art, and one embodiment of the present invention is related to a hydraulic system for a construction machine, which can prevent off-course travel of the machine when a combined operation of a traveling device and a working device, such as a boom, is performed, and thus can improve traveling operability.

### TECHNICAL SOLUTION

In accordance with a first aspect of the present invention, there is provided a hydraulic system for a construction machine, which includes first and second hydraulic pumps connected to an engine; a left traveling operation lever, a right traveling operation lever, and actuator operation levers for first and second working devices outputting an operation signal in proportion to an operation amount by an operator; a left traveling motor connected to a discharge flow path of the first hydraulic pump to be driven by a first control valve that is shifted by an operation of the left traveling operation lever; a right traveling motor connected to a flow path that is branched from a discharge flow path of the second hydraulic pump to be driven by a third control valve that is shifted by an operation of the right traveling operation lever; a hydraulic actuator for the working device connected to the flow path that is branched from the discharge flow path of the first hydraulic pump to be driven by a fourth control valve that is shifted by an operation of the actuator operation lever for the first working device; a hydraulic actuator for the working device connected to the discharge flow path of the second hydraulic pump to be driven by a second control valve that is shifted by an operation of the actuator operation lever for the second working device; a first pressure compensated valve which is installed on one side of an upper stream and a downstream of the first control valve and of which an opening amount is controlled according to a difference between a maximum load sensing pressure of an actuator connected to the first hydraulic pump and a discharge flow path pressure; a second pressure compensated valve which is installed on one side of an upper stream and a downstream of the second control valve and of which an opening amount is controlled according to a difference between a maximum load sensing pressure of an actuator connected to the second hydraulic pump and a discharge flow path pressure; a third pressure compensated valve which is installed on one side of an upper stream and a downstream of the third control valve and of which an opening amount is controlled according to the difference between the maximum load sensing pressure of the actuator connected to the second hydraulic pump and the discharge flow path pressure; a fourth pressure compensated valve which is installed on one side of an upper stream and a downstream of the fourth control valve and of which an opening amount is controlled according to the difference between the maximum load sensing pressure of the actuator connected to the first hydraulic pump and the discharge flow path pressure; a first orifice connected to the first pressure compensated valve of the first control valve, a first load sensing line connected to the fourth pressure compensated valve of the fourth control valve, and a hydraulic tank; a second orifice connected to the second pressure compensated valve of the second control valve, a second load sensing line connected to the third pressure compensated valve of the third control valve, and the hydraulic tank; a confluence valve which is installed in a confluence flow path that connects the discharge flow paths of the first and second hydraulic pumps in parallel, of which an opening amount is controlled according to operation amounts of the traveling operation levers or the actuator operation levers for the first and second working devices, which sums discharge flow rates of the first and second hydraulic pumps, and which makes the first load sensing line and the second load sensing line communicate with each other; a traveling communication valve installed in a flow path connecting the downstream of the left traveling first pressure compensated valve to the downstream of the right traveling third pressure compensated valve to open or close the flow path by an external control signal; and a controller outputting a control signal for controlling the traveling communication valve to shift the flow path to a communication position when a combined operation for simultaneously operating the traveling device and the working device is performed.

In accordance with a second aspect of the present invention, there is provided a hydraulic system for a construction machine, which includes first and second hydraulic pumps connected to an engine; a left traveling operation lever, a right traveling operation lever, and an actuator operation lever for a first working device outputting an operation signal in proportion to an operation amount by an operator; a left traveling motor connected to a discharge flow path of the first hydraulic pump to be driven by a first control valve that is shifted by an operation of the left traveling operation lever; a right traveling motor connected to a discharge flow path of the second hydraulic pump to be driven by a third control valve that is shifted by an operation of the right traveling operation lever; a hydraulic actuator for a working device connected to the flow path that is branched from the discharge flow path of the first hydraulic pump to be driven by a fourth control valve that is shifted by an operation of the actuator operation lever for the first working device; a first pressure compensated valve which is installed on one side of an upper stream and a downstream of the first control valve and of which an opening amount is controlled according to a difference between a maximum load sensing pressure of an actuator connected to the first hydraulic pump and a discharge flow path pressure; a third pressure compensated valve which is installed on one side of an upper stream and a downstream of the third control valve and of which an opening amount is controlled according to the difference between the maximum load sensing pressure of the actuator connected to the second hydraulic pump and the discharge flow path pressure; a fourth pressure compensated valve which is installed on one side of an upper stream and a downstream of the fourth control valve and of which an opening amount is controlled according to the difference between the maximum load sensing pressure of the actuator connected to the first hydraulic pump and the discharge flow path pressure; a first orifice connected to the first pressure compensated valve of the first control valve, a first load sensing line connected to the fourth pressure compensated valve of the fourth control valve, and a hydraulic tank; a second orifice connected to a second load sensing line connected to the third pressure compensated valve of the third control valve and the hydraulic tank; a confluence valve which is installed in a confluence flow path that connects the discharge flow paths of the first and second hydraulic pumps in parallel, of which an opening amount is controlled according to an operation amount of the traveling operation lever or the actuator operation lever for the first working device, which sums discharge flow rates of the first and second hydraulic pumps, and which makes the first load sensing line and the second load sensing line communicate with each other; a traveling communication valve installed in a flow path connecting the downstream of the left traveling first pressure compensated valve to the downstream of the right traveling third pressure compensated valve to open or close the flow path by an external control signal; and a controller controlling the traveling communication valve to shift the flow path to a communication position when a combined operation for simultaneously operating the traveling device and the working device is performed.

In accordance with a third aspect of the present invention, there is provided a hydraulic system for a construction machine, which includes first and second hydraulic pumps connected to an engine; a left traveling operation lever, a right traveling operation lever, and an actuator operation lever for a second working device outputting an operation signal in proportion to an operation amount by an operator; a left traveling motor connected to a discharge flow path of the first hydraulic pump to be driven by a first control valve that is shifted by an operation of the left traveling operation lever; a right traveling motor connected to a flow path that is branched from a discharge flow path of the second hydraulic pump to be driven by a third control valve that is shifted by an operation of the right traveling operation lever; a hydraulic actuator for a working device connected to the discharge flow path of the second hydraulic pump to be driven by a second control valve that is shifted by an operation of the actuator operation lever for the second working device; a first pressure compensated valve which is installed on one side of an upper stream and a downstream of the first control valve and of which an opening amount is controlled according to a difference between a maximum load sensing pressure of an actuator connected to the first hydraulic pump and a discharge flow path pressure; a second pressure compensated valve which is installed on one side of an upper stream and a downstream of the second control valve and of which an opening amount is controlled according to a difference between a maximum load sensing pressure of an actuator connected to the second hydraulic pump and a discharge flow path pressure; a third pressure compensated valve which is installed on one side of an upper stream and a downstream of the third control valve and of which an opening amount is controlled according to the difference between the maximum load sensing pressure of the actuator connected to the second hydraulic pump and the discharge flow path pressure; a first orifice connected to a first load sensing line connected to the first pressure compensated valve of the first control valve, and a hydraulic tank; a second orifice connected to the second pressure compensated valve of the second control valve, a second load sensing line connected to the third pressure compensated valve of the third control valve, and the hydraulic tank; a confluence valve which is installed in a confluence flow path that connects the discharge flow paths of the first and second hydraulic pumps in parallel, of which an opening amount is controlled according to an operation amount of the traveling operation lever or the actuator operation lever for the second working device, which sums discharge flow rates of the first and second hydraulic pumps, and which makes the first load sensing line and the second load sensing line communicate with each other; a traveling communication valve installed in a flow path connecting the downstream of the left traveling first pressure compensated valve to the downstream of the right traveling third pressure compensated valve to open or close the flow path by an external control signal; and a controller controlling the traveling communication valve to shift the flow path to a communication position when a combined operation for simultaneously operating the traveling device and the working device is performed.

Preferably, the traveling communication valve may be composed of a solenoid valve that is shifted by an electric signal from the controller.

The traveling communication valve may be connected to a solenoid valve that outputs pilot signal pressure that corresponds to the control signal from the controller so that the traveling communication valve is shifted when the pilot signal pressure is supplied.

The solenoid valve may be composed of a valve having characteristics that the solenoid valve is on/off-shifted according to existence/nonexistence of an input of the electric signal.

The solenoid valve may be composed of a valve having characteristics that the solenoid valve outputs pilot pressure in proportion to an input size of the electric signal.

The left and right traveling operation levers and the actuator operation levers for the first and second working devices may include operation amount sensing means for sensing operations of the operation levers and transmitting detection signals to the controller.

The operation amount sensing means may be composed of a pressure sensor.

The controller may sense the operations of the left and right traveling operation levers by detecting the operation amounts through a sensing means for sensing the operation amounts of the left and right traveling operation levers and a sensing means for sensing the operation amounts of the actuator operation levers for the first and second working devices, and in the case where at least one of the operations of the actuator operation levers for the first and second working devices is sensed, the controller may not output the control signal to the traveling communication valve if the difference between the operation amounts of the left and right traveling operation devices exceeds a set value, while the controller may output the control signal to the traveling communication valve if the difference between the operation amounts of the left and right traveling operation devices is smaller than the set value.

The left and right traveling operation levers and the actuator operation levers for the first and second working devices may include electric operation devices that output electric signals to the controller in proportion to the operation amounts.

The left and right traveling operation levers and the actuator operation levers for the first and second working devices may include hydraulic operation devices that output pilot signal pressure in proportion to the operation amounts.

The left and right traveling operation levers and the actuator operation lever for the first working device may include operation amount sensing means for sensing operations of the operation levers and transmitting detection signals to the controller.

The controller may sense the operations of the left and right traveling operation levers by detecting the operation amounts through a sensing means for sensing the operation amounts of the left and right traveling operation levers and a sensing means for sensing the operation amount of the actuator operation lever for the first working device, and in the case where the operation of the actuator operation lever for the first working device is sensed, the controller may not output the control signal to the traveling communication valve if the difference between the operation amounts of the left and right traveling operation devices exceeds a set value, while the controller may output the control signal to the traveling communication valve if the difference between the operation amounts of the left and right traveling operation devices is smaller than the set value.

The left and right traveling operation levers and the actuator operation lever for the first working device may include electric operation devices that output electric signals to the controller in proportion to the operation amounts.

The left and right traveling operation levers and the actuator operation lever for the first working device may include hydraulic operation devices that output pilot signal pressure in proportion to the operation amounts.

The left and right traveling operation levers and the actuator operation lever for the second working devices may include operation amount sensing means for sensing operations of the operation levers and transmitting detection signals to the controller.

The controller may sense the operations of the left and right traveling operation levers by detecting the operation amounts through a sensing means for sensing the operation amounts of the left and right traveling operation levers and a sensing means for sensing the operation amount of the actuator operation lever for the second working device, and in the case where the operation of the actuator operation lever for the second working device is sensed, the controller may not output the control signal to the traveling communication valve if the difference between the operation amounts of the left and right traveling operation devices exceeds a set value, while the controller may output the control signal to the traveling communication valve if the difference between the operation amounts of the left and right traveling operation devices is smaller than the set value.

The left and right traveling operation levers and the actuator operation lever for the second working device may include electric operation devices that output electric signals to the controller in proportion to the operation amounts.

The left and right traveling operation levers and the actuator operation lever for the second working device may include hydraulic operation devices that output pilot signal pressure in proportion to the operation amounts.

### ADVANTAGEOUS EFFECT

The hydraulic system for a construction machine as configured above according to the aspects of the present invention has the following advantages.

Since the off-course travel of the machine can be prevented from occurring when a combined operation of a traveling device and a working device such as a boom is performed, a user can perform the combined operation according to the user's intention, and thus the traveling operability can be improved. Accordingly, the work efficiency can be heightened, and the safety can be improved.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a hydraulic circuit diagram of a hydraulic system for a construction machine in the related art;
Fig. 2 is a hydraulic circuit diagram of a hydraulic system for a construction machine according to a first embodiment of the present invention;
Fig. 3 is a hydraulic circuit diagram of a hydraulic system for a construction machine according to a second embodiment of the present invention; and
Fig. 4 is a hydraulic circuit diagram of a hydraulic system for a construction machine according to a third embodiment of the present invention.

### * Description of Reference Numerals in the Drawing

1: first hydraulic pump
3: left traveling operation lever
5: operation lever for a second working device
7: first control valve
9: hydraulic actuator for a working device
11: third control valve
13: second pressure compensated valve
15: flow path
17: first load sensing line
19: second load sensing line
21: flow path
23: solenoid valve

### BEST MODE

Hereinafter, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

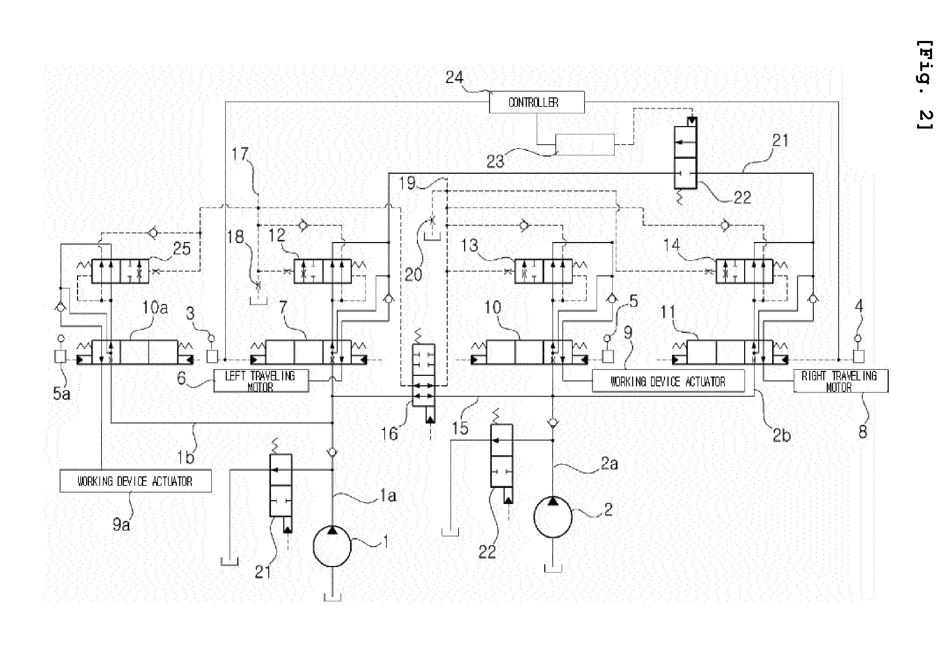

A hydraulic system for a construction machine according to a first embodiment of the present invention, as illustrated in Fig. 2, includes first and second hydraulic pumps 1 and 2 connected to an engine (not illustrated); a left traveling operation lever 3, a right traveling operation lever 4, and actuator operation levers 5 and 5a for first and second working devices outputting an operation signal in proportion to an operation amount by an operator; a left traveling motor 6 connected to a discharge flow path 1a of the first hydraulic pump 1 to be driven by an operation of the left traveling operation lever 3; a first control valve 7 installed in the discharge flow path 1a of the first hydraulic pump 1 and shifted to control start, stop, and direction change of the left traveling motor 6 in response to the operation of the left traveling operation lever 3; a right traveling motor 8 connected to a flow path 2b that is branched from a discharge flow path 2a of the second hydraulic pump 2 to be driven by an operation of the right traveling operation lever 4; a hydraulic actuator (arm cylinder or the like) 9a for the working device connected to a flow path 1b that is branched from the discharge flow path 1a of the first hydraulic pump 1 to be driven by an operation of the actuator operation lever 5a for the first working device; a hydraulic actuator (boom cylinder or the like) 9 for the working device connected to the discharge flow path 2a of the second hydraulic pump 2 to be driven by an operation of the actuator operation lever 5 for the second working device; a second control valve 10 installed in the discharge flow path 2a of the second hydraulic pump 2 and shifted to control start, stop, and direction change of the hydraulic actuator 9 in response to the operation of the operation lever 5 for the second working device; a third control valve 11 installed in a flow path 2b that is branched from the discharge flow path 2a of the second hydraulic pump 2 and shifted to control start, stop, and direction change of the right traveling motor 8 in response to the operation of the right traveling operation lever 4; a fourth control valve 10a installed in the flow path 1b that is branched from the discharge flow path 1a of the first hydraulic pump 1 and shifted to control start, stop, and direction change of the hydraulic actuator 9a in response to the operation of the operation lever 5a for the first working device; a first pressure compensated valve 12 which is installed on one side of an upper stream and a downstream of the first control valve 7 and of which an opening amount is controlled according to a difference between a maximum load sensing pressure of the actuator connected to the first hydraulic pump 1 and a pressure of the discharge flow path 1a; a second pressure compensated valve 13 which is installed on one side of an upper stream and a downstream of the second control valve 10 and of which an opening amount is controlled according to a difference between the maximum load sensing pressure of the actuator connected to the second hydraulic pump 2 and a pressure of the discharge flow path 2a; a third pressure compensated valve 14 which is installed on one side of an upper stream and a downstream of the third control valve 11 and of which an opening amount is controlled according to the difference between the maximum load sensing pressure of the actuator connected to the second hydraulic pump 2 and the pressure of the discharge flow path 2a; a fourth pressure compensated valve 25 which is installed on one side of an upper stream and a downstream of the fourth control valve 10a and of which an opening amount is controlled according to the difference between the maximum load sensing pressure of the actuator connected to the first hydraulic pump 1 and the pressure of the discharge flow path 1a; a first orifice 18 connected to the first pressure compensated valve 12 of the first control valve 7, a first load sensing line 17 connected to the fourth pressure compensated valve 25 of the fourth control valve 10a, and a hydraulic tank; a second orifice 20 connected to the second pressure compensated valve 13 of the second control valve 10, a second load sensing line 19 connected to the third pressure compensated valve 14 of the third control valve 11, and the hydraulic tank; a confluence valve 16 which is installed in a confluence flow path 15 that connects the discharge flow paths 1a and 2a of the first and second hydraulic pumps 1 and 2 in parallel, of which an opening amount is controlled according to operation amounts of the traveling operation levers 3 and 4 or the actuator operation levers 5 and 5a for the first and second working devices, which sums discharge flow rates of the first and second hydraulic pumps 1 and 2, and which makes the first load sensing line 17 and the second load sensing line 19 communicate with each other; a traveling communication valve 22 installed in a flow path 21 connecting the downstream of the left traveling first pressure compensated valve 12 to the downstream of the right traveling third pressure compensated valve 14 to open or close the flow path 21 by an external control signal; and a controller 24 outputting a control signal for controlling the traveling communication valve 22 to shift the flow path 21 to a communication position when a combined operation for simultaneously operating the traveling device and the working device is performed.

The traveling communication valve 22 is composed of a solenoid valve that is shifted by an electric signal from the controller 24.

The traveling communication valve 22 is connected to a solenoid valve 23 that outputs pilot signal pressure that corresponds to the control signal from the controller 24 so that the traveling communication valve 22 is shifted when the pilot signal pressure is supplied.

The solenoid valve 23 is composed of a valve having characteristics that the solenoid valve 23 is on/off-shifted according to existence/nonexistence of an input of the electric signal.

The solenoid valve 23 is composed of a valve having characteristics that the solenoid valve 23 outputs pilot pressure in proportion to an input size of the electric signal.

The left and right traveling operation levers 3 and 4 and the actuator operation levers 5 and 5a for the first and second working devices include operation amount sensing means (not illustrated) for sensing operations of the operation levers and transmitting detection signals to the controller 24.

The controller 24 senses the operations of the left and right traveling operation levers 3 and 4 by detecting the operation amounts through a sensing means for sensing the operation amounts of the left and right traveling operation levers 3 and 4 and a sensing means for sensing the operation amounts of the actuator operation levers 5 and 5a for the first and second working devices, and in the case where at least one of the operations of the actuator operation levers 5 and 5a for the first and second working devices is sensed, the controller 24 does not output the control signal to the traveling communication valve 22 if the difference between the operation amounts of the left and right traveling operation devices 3 and 4 exceeds a set value, while the controller 24 outputs the control signal to the traveling communication valve 22 if the difference between the operation amounts of the left and right traveling operation devices 3 and 4 is smaller than the set value.

The left and right traveling operation levers 3 and 4 and the actuator operation levers 5 and 5a for the first and second working devices include electric operation devices that output electric signals to the controller 24 in proportion to the operation amounts.

The left and right traveling operation levers 3 and 4 and the actuator operation levers 5 and 5a for the first and second working devices include hydraulic operation devices that output pilot signal pressure in proportion to the operation amounts.

The operation amount sensing means is composed of a pressure sensor.

Since the configuration, except for the traveling communication valve 22 that opens or closes the flow path 21 by the control signal that is output from the controller 24 to the solenoid valve 23 according to the input of the operation signals of the traveling operation levers 3 and 4 and the operation levers 5 and 5a for the first and second working devices and the controller 24, is substantially the same as the configuration of the hydraulic system illustrated in Fig. 1, the detailed explanation of the configuration and operation thereof will be omitted. The same reference numerals are used for the duplicate configurations.

Hereinafter, a use example of a hydraulic system for a construction machine according to the first embodiment of the present invention will be described in detail with reference to the accompanying drawings.

As shown in Fig. 2, in the case where a working device, such as a boom or an arm, of an excavator is driven to perform excavating work, a spool of the second control valve 10 is shifted in the left direction as shown in the drawing according to the pilot pressure that is supplied as an operator operates the operation lever 5 for the second working device. Accordingly, the hydraulic actuator 9 is driven by the hydraulic fluid that is discharged from the second hydraulic pump 2, and thus the working device such as the boom is operated. At the same time, the left traveling operation lever 3 and the right traveling operation lever 4 may be finely operated to make the machine travel to move a heavy earthen pipe or the like.

When a combined operation of the traveling device and the working device, such as the boom, is performed as described above, the sensing means senses the operation amount of the left and right traveling operation levers 3 and 4 and output detection signals to the controller 24. Accordingly, the traveling communication valve 22 is shifted in the lower direction in the drawing by secondary signal pressure corresponding to the control signal that is output from the controller 24 to the solenoid valve 23. Due to the spool shift of the traveling communication valve 22 to communicate with the flow path 21, the left traveling supply flow path and the right traveling supply flow path communicate with each other, and thus the occurrence of the off-course travel of the machine can be prevented.

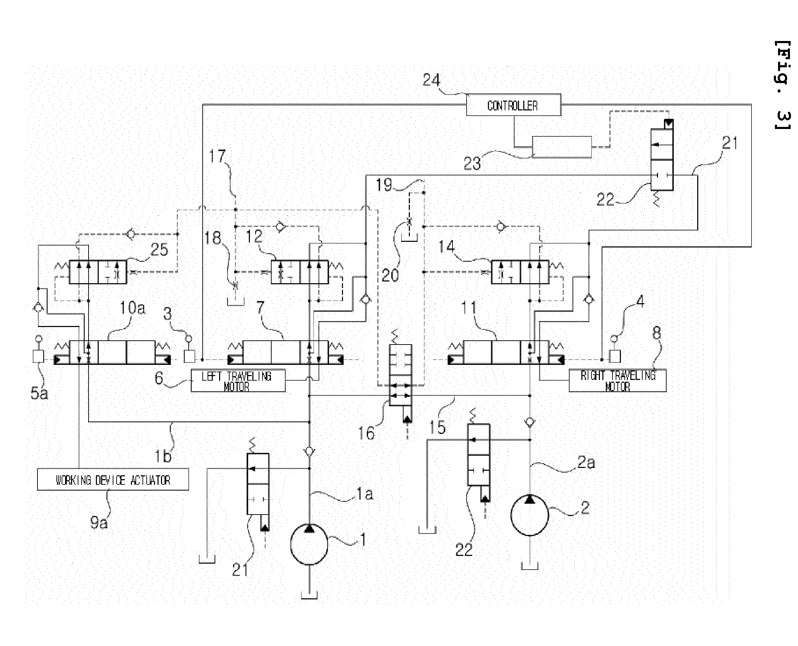

A hydraulic system for a construction machine according to a second embodiment of the present invention, as illustrated in Fig. 3, includes first and second hydraulic pumps 1 and 2 connected to an engine (not illustrated); a left traveling operation lever 3, a right traveling operation lever 4, and an actuator operation lever 5a for a first working device outputting an operation signal in proportion to an operation amount by an operator; a left traveling motor 6 connected to a discharge flow path 1a of the first hydraulic pump 1 to be driven by a first control valve 7 that is shifted by an operation of the left traveling operation lever 3; a right traveling motor 8 connected to a discharge flow path 2a of the second hydraulic pump 2 to be driven by a third control valve 11 that is shifted by an operation of the right traveling operation lever 4; a hydraulic actuator (arm cylinder or the like) 9a for a working device connected to the flow path 1b that is branched from the discharge flow path 1a of the first hydraulic pump 1 to be driven by a fourth control valve 10a that is shifted by an operation of the actuator operation lever 5a for the first working device; a first pressure compensated valve 12 which is installed on one side of an upper stream and a downstream of the first control valve 7 and of which an opening amount is controlled according to a difference between a maximum load sensing pressure of an actuator connected to the first hydraulic pump 1 and a pressure of the discharge flow path 1a; a third pressure compensated valve 14 which is installed on one side of an upper stream and a downstream of the third control valve 11 and of which an opening amount is controlled according to the difference between the maximum load sensing pressure of the actuator connected to the second hydraulic pump 2 and a pressure of the discharge flow path 2a; a fourth pressure compensated valve 25 which is installed on one side of an upper stream and a downstream of the fourth control valve 10a and of which an opening amount is controlled according to the difference between the maximum load sensing pressure of the actuator connected to the first hydraulic pump 1 and the pressure of the discharge flow path 1a; a first orifice 18 connected to the first pressure compensated valve 12 of the first control valve 7, a first load sensing line 17 connected to the fourth pressure compensated valve 25 of the fourth control valve 10a, and a hydraulic tank; a second orifice 20 connected to a second load sensing line 19 connected to the third pressure compensated valve 14 of the third control valve 11 and the hydraulic tank; a confluence valve 16 which is installed in a confluence flow path 15 that connects the discharge flow paths 1a and 2a of the first and second hydraulic pumps 1 and 2 in parallel, of which an opening amount is controlled according to an operation amount of the traveling operation levers 3 and 4 or the actuator operation lever 5a for the first working device, which sums discharge flow rates of the first and second hydraulic pumps 1 and 2, and which makes the first load sensing line 17 and the second load sensing line 19 communicate with each other; a traveling communication valve 22 installed in a flow path 21 connecting the downstream of the left traveling first pressure compensated valve 12 to the downstream of the right traveling third pressure compensated valve 14 to open or close the flow path 21 by an external control signal; and a controller 24 controlling the traveling communication valve 22 to shift the flow path 21 to a communication position when a combined operation for simultaneously operating the traveling device and the working device is performed.

The left and right traveling operation levers 3 and 4 and the actuator operation lever 5a for the first working device includes operation amount sensing means for sensing operations of the operation levers and transmitting detection signals to the controller 24.

The controller 24 senses the operations of the left and right traveling operation levers 3 and 4 by detecting the operation amounts through a sensing means for sensing the operation amounts of the left and right traveling operation levers 3 and 4 and a sensing means for sensing the operation amount of the actuator operation lever 5a for the first working device, and in the case where the operation of the actuator operation lever 5a for the first working device is sensed, the controller 24 does not output the control signal to the traveling communication valve 22 if the difference between the operation amounts of the left and right traveling operation devices 3 and 4 exceeds a set value, while the controller 24 outputs the control signal to the traveling communication valve 22 if the difference between the operation amounts of the left and right traveling operation devices 3 and 4 is smaller than the set value.

The left and right traveling operation levers 3 and 4 and the actuator operation lever 5a for the first working device may include electric operation devices that output electric signals to the controller 24 in proportion to the operation amounts.

The left and right traveling operation levers 3 and 4 and the actuator operation lever 5a for the first working device may include hydraulic operation devices that output pilot signal pressure in proportion to the operation amounts.

Since the configuration, except for the hydraulic actuator 9a for the working device connected to the flow path 1b that is branched from the discharge flow path 1a of the first hydraulic pump 1, the fourth control valve 10a installed in the flow path 1b, and the fourth pressure compensated valve 25 installed on one side of the upper stream and the downstream of the fourth control valve 10a, is substantially the same as the configuration of the hydraulic system according to the first embodiment of the present invention, the detailed explanation of the configuration and operation thereof will be omitted. The same reference numerals are used for the duplicate configurations.

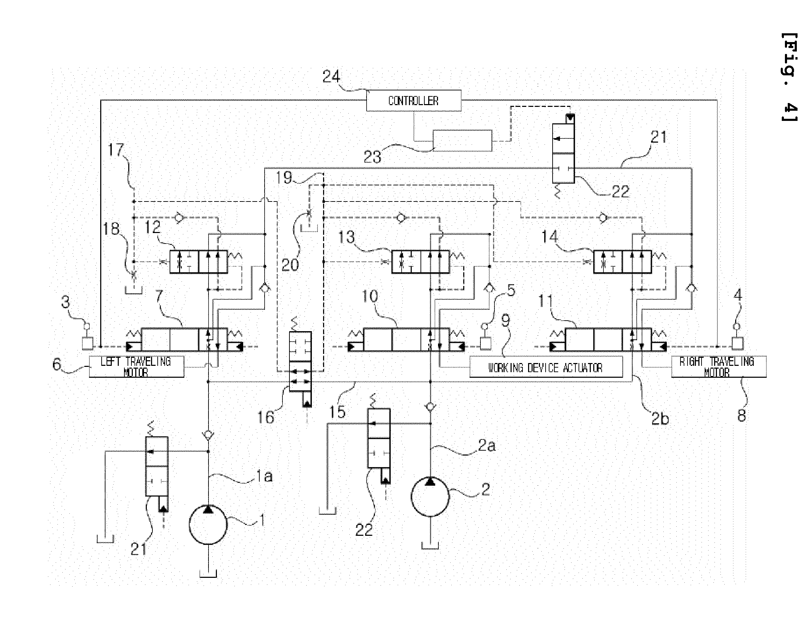

A hydraulic system for a construction machine according to a third embodiment of the present invention, as illustrated in Fig. 4, includes first and second hydraulic pumps 1 and 2 connected to an engine (not illustrated); a left traveling operation lever 3, a right traveling operation lever 4, and an actuator operation lever 5 for a second working device outputting an operation signal in proportion to an operation amount by an operator; a left traveling motor 6 connected to a discharge flow path 1a of the first hydraulic pump 1 to be driven by a first control valve 7 that is shifted by an operation of the left traveling operation lever 3; a right traveling motor 8 connected to a flow path 2b that is branched from a discharge flow path 2a of the second hydraulic pump 2 to be driven by a third control valve 11 that is shifted by an operation of the right traveling operation lever 4; a hydraulic actuator (boom cylinder or the like) 9 for a working device connected to the discharge flow path 2a of the second hydraulic pump 2 to be driven by a second control valve 10 that is shifted by an operation of the actuator operation lever for the second working device 5; a first pressure compensated valve 12 which is installed on one side of an upper stream and a downstream of the first control valve 7 and of which an opening amount is controlled according to a difference between a maximum load sensing pressure of an actuator connected to the first hydraulic pump 1 and a pressure of the discharge flow path 1a; a second pressure compensated valve 13 which is installed on one side of an upper stream and a downstream of the second control valve 10 and of which an opening amount is controlled according to a difference between a maximum load sensing pressure of an actuator connected to the second hydraulic pump 2 and a pressure of the discharge flow path 2a; a third pressure compensated valve 14 which is installed on one side of an upper stream and a downstream of the third control valve 11 and of which an opening amount is controlled according to the difference between the maximum load sensing pressure of the actuator connected to the second hydraulic pump 2 and the pressure of the discharge flow path 2a; a first orifice 18 connected to a first load sensing line 17 connected to the first pressure compensated valve 12 of the first control valve 7, and a hydraulic tank; a second orifice 20 connected to the second pressure compensated valve 13 of the second control valve 10, a second load sensing line 19 connected to the third pressure compensated valve 14 of the third control valve 11, and the hydraulic tank; a confluence valve 16 which is installed in a confluence flow path 15 that connects the discharge flow paths 1a and 2a of the first and second hydraulic pumps 1a and 2 in parallel, of which an opening amount is controlled according to an operation amount of the traveling operation levers 3 and 4 or the actuator operation lever 5 for the second working device, which sums discharge flow rates of the first and second hydraulic pumps 1 and 2, and which makes the first load sensing line 17 and the second load sensing line 19 communicate with each other; a traveling communication valve 22 installed in a flow path 21 connecting the downstream of the left traveling first pressure compensated valve 12 to the downstream of the right traveling third pressure compensated valve 14 to open or close the flow path 21 by an external control signal; and a controller 24 controlling the traveling communication valve 22 to shift the flow path 21 to a communication position when a combined operation for simultaneously operating the traveling device and the working device is performed.

The left and right traveling operation levers 3 and 4 and the actuator operation lever 5 for the second working devices include operation amount sensing means for sensing operations of the operation levers and transmitting detection signals to the controller 24.

The controller 24 senses the operations of the left and right traveling operation levers 3 and 4 by detecting the operation amounts through a sensing means for sensing the operation amounts of the left and right traveling operation levers 3 and 4 and a sensing means for sensing the operation amount of the actuator operation lever 5 for the second working device, and in the case where the operation of the actuator operation lever 5 for the second working device is sensed, the controller 24 does not output the control signal to the traveling communication valve 22 if the difference between the operation amounts of the left and right traveling operation devices 3 and 4 exceeds a set value, while the controller 24 outputs the control signal to the traveling communication valve 22 if the difference between the operation amounts of the left and right traveling operation devices 3 and 4 is smaller than the set value.

The left and right traveling operation levers 3 and 4 and the actuator operation lever 5 for the second working device may include electric operation devices that output electric signals to the controller 24 in proportion to the operation amounts.

The left and right traveling operation levers 3 and 4 and the actuator operation lever 5 for the second working device may include hydraulic operation devices that output pilot signal pressure in proportion to the operation amounts.

Since the configuration, except for the hydraulic actuator 9 for the working device connected to the discharge flow path 2a of the second hydraulic pump 2, the third control valve 11 installed in the flow path 2b that is branched from the discharge flow path 2a, and the third pressure compensated valve 14 installed on one side of the upper stream and the downstream of the third control valve 11, is substantially the same as the configuration of the hydraulic system according to the first embodiment of the present invention, the detailed explanation of the configuration and operation thereof will be omitted. The same reference numerals are used for the duplicate configurations.

### INDUSTRIAL APPLICABILITY

As apparent from the above description, according to the hydraulic system for a construction machine according to the embodiments of the present invention, the off-course travel of the machine can be prevented from occurring through the distribution supply of the discharge flow rate of the hydraulic pump when a combined operation of the traveling device and the working device such as the boom is performed, and thus the traveling operability can be improved. Accordingly, the work efficiency can be heightened, and the safety can be improved.

## Claims

1. A hydraulic system for a construction machine, comprising:
first and second hydraulic pumps connected to an engine;
a left traveling operation lever, a right traveling operation lever, and actuator operation levers for first and second working devices outputting an operation signal in proportion to an operation amount by an operator;
a left traveling motor connected to a discharge flow path of the first hydraulic pump to be driven by a first control valve that is shifted by an operation of the left traveling operation lever;
a right traveling motor connected to a flow path that is branched from a discharge flow path of the second hydraulic pump to be driven by a third control valve that is shifted by an operation of the right traveling operation lever;
a hydraulic actuator for the working device connected to the flow path that is branched from the discharge flow path of the first hydraulic pump to be driven by a fourth control valve that is shifted by an operation of the actuator operation lever for the first working device;
a hydraulic actuator for the working device connected to the discharge flow path of the second hydraulic pump to be driven by a second control valve that is shifted by an operation of the actuator operation lever for the second working device;
a first pressure compensated valve which is installed on one side of an upper stream and a downstream of the first control valve and of which an opening amount is controlled according to a difference between a maximum load sensing pressure of an actuator connected to the first hydraulic pump and a discharge flow path pressure;
a second pressure compensated valve which is installed on one side of an upper stream and a downstream of the second control valve and of which an opening amount is controlled according to a difference between a maximum load sensing pressure of an actuator connected to the second hydraulic pump and a discharge flow path pressure;
a third pressure compensated valve which is installed on one side of an upper stream and a downstream of the third control valve and of which an opening amount is controlled according to the difference between the maximum load sensing pressure of the actuator connected to the second hydraulic pump and the discharge flow path pressure;
a fourth pressure compensated valve which is installed on one side of an upper stream and a downstream of the fourth control valve and of which an opening amount is controlled according to the difference between the maximum load sensing pressure of the actuator connected to the first hydraulic pump and the discharge flow path pressure;
a first orifice connected to the first pressure compensated valve of the first control valve, a first load sensing line connected to the fourth pressure compensated valve of the fourth control valve, and a hydraulic tank;
a second orifice connected to the second pressure compensated valve of the second control valve, a second load sensing line connected to the third pressure compensated valve of the third control valve, and the hydraulic tank;
a confluence valve which is installed in a confluence flow path that connects the discharge flow paths of the first and second hydraulic pumps in parallel, of which an opening amount is controlled according to operation amounts of the traveling operation levers or the actuator operation levers for the first and second working devices, which sums discharge flow rates of the first and second hydraulic pumps, and which makes the first load sensing line and the second load sensing line communicate with each other;
a traveling communication valve installed in a flow path connecting the downstream of the left traveling first pressure compensated valve to the downstream of the right traveling third pressure compensated valve to open or close the flow path by an external control signal; and
a controller outputting a control signal for controlling the traveling communication valve to shift the flow path to a communication position when a combined operation for simultaneously operating a traveling device and the working device is performed.

2. The hydraulic system for a construction machine according to claim 1, wherein the traveling communication valve is composed of a solenoid valve that is shifted by an electric signal from the controller.

3. The hydraulic system for a construction machine according to claim 1, wherein the traveling communication valve is connected to a solenoid valve that outputs pilot signal pressure that corresponds to the control signal from the controller so that the traveling communication valve is shifted when the pilot signal pressure is supplied.

4. The hydraulic system for a construction machine according to claim 3, wherein the solenoid valve is composed of a valve having characteristics that the solenoid valve is on/off-shifted according to existence/nonexistence of an input of the electric signal.

5. The hydraulic system for a construction machine according to claim 1, wherein the solenoid valve is composed of a valve having characteristics that the solenoid valve outputs pilot pressure in proportion to an input size of the electric signal.

6. The hydraulic system for a construction machine according to claim 1, wherein the left and right traveling operation levers and the actuator operation levers for the first and second working devices comprise operation amount sensing means for sensing operations of the operation levers and transmitting detection signals to the controller.

7. The hydraulic system for a construction machine according to claim 6, wherein the operation amount sensing means is composed of a pressure sensor.

8. The hydraulic system for a construction machine according to claim 1, wherein the controller senses the operations of the left and right traveling operation levers by detecting the operation amounts through a sensing means for sensing the operation amounts of the left and right traveling operation levers and a sensing means for sensing the operation amounts of the actuator operation levers for the first and second working devices, and in the case where at least one of the operations of the actuator operation levers for the first and second working devices is sensed, the controller does not output the control signal to the traveling communication valve if the difference between the operation amounts of the left and right traveling operation devices exceeds a set value, while the controller outputs the control signal to the traveling communication valve if the difference between the operation amounts of the left and right traveling operation devices is smaller than the set value.

9. The hydraulic system for a construction machine according to claim 1, wherein the left and right traveling operation levers and the actuator operation levers for the first and second working devices comprise electric operation devices that output electric signals to the controller in proportion to the operation amounts.

10. The hydraulic system for a construction machine according to claim 1, wherein the left and right traveling operation levers and the actuator operation levers for the first and second working devices comprise hydraulic operation devices that output pilot signal pressure in proportion to the operation amounts.

11. A hydraulic system for a construction machine, comprising:
first and second hydraulic pumps connected to an engine;
a left traveling operation lever, a right traveling operation lever, and an actuator operation lever for a first working device outputting an operation signal in proportion to an operation amount by an operator;
a left traveling motor connected to a discharge flow path of the first hydraulic pump to be driven by a first control valve that is shifted by an operation of the left traveling operation lever;
a right traveling motor connected to a discharge flow path of the second hydraulic pump to be driven by a third control valve that is shifted by an operation of the right traveling operation lever;
a hydraulic actuator for a working device connected to the flow path that is branched from the discharge flow path of the first hydraulic pump to be driven by a fourth control valve that is shifted by an operation of the actuator operation lever for the first working device;
a first pressure compensated valve which is installed on one side of an upper stream and a downstream of the first control valve and of which an opening amount is controlled according to a difference between a maximum load sensing pressure of an actuator connected to the first hydraulic pump and a discharge flow path pressure;
a third pressure compensated valve which is installed on one side of an upper stream and a downstream of the third control valve and of which an opening amount is controlled according to the difference between the maximum load sensing pressure of the actuator connected to the second hydraulic pump and the discharge flow path pressure;
a fourth pressure compensated valve which is installed on one side of an upper stream and a downstream of the fourth control valve and of which an opening amount is controlled according to the difference between the maximum load sensing pressure of the actuator connected to the first hydraulic pump and the discharge flow path pressure;
a first orifice connected to the first pressure compensated valve of the first control valve, a first load sensing line connected to the fourth pressure compensated valve of the fourth control valve, and a hydraulic tank;
a second orifice connected to a second load sensing line connected to the third pressure compensated valve of the third control valve and the hydraulic tank;
a confluence valve which is installed in a confluence flow path that connects the discharge flow paths of the first and second hydraulic pumps in parallel, of which an opening amount is controlled according to an operation amount of the traveling operation lever or the actuator operation lever for the first working device, which sums discharge flow rates of the first and second hydraulic pumps, and which makes the first load sensing line and the second load sensing line communicate with each other;
a traveling communication valve installed in a flow path connecting the downstream of the left traveling first pressure compensated valve to the downstream of the right traveling third pressure compensated valve to open or close the flow path by an external control signal; and
a controller controlling the traveling communication valve to shift the flow path to a communication position when a combined operation for simultaneously operating a traveling device and the working device is performed.

12. The hydraulic system for a construction machine according to claim 11, wherein the traveling communication valve is composed of a solenoid valve that is shifted by an electric signal from the controller.

13. The hydraulic system for a construction machine according to claim 11, wherein the traveling communication valve is connected to a solenoid valve that outputs pilot signal pressure that corresponds to the control signal from the controller so that the traveling communication valve is shifted when the pilot signal pressure is supplied.

14. The hydraulic system for a construction machine according to claim 13, wherein the solenoid valve is composed of a valve having characteristics that the solenoid valve is on/off-shifted according to existence/nonexistence of an input of the electric signal.

15. The hydraulic system for a construction machine according to claim 11, wherein the solenoid valve is composed of a valve having characteristics that the solenoid valve outputs pilot pressure in proportion to an input size of the electric signal.

16. The hydraulic system for a construction machine according to claim 11, wherein the left and right traveling operation levers and the actuator operation lever for the first working device comprise operation amount sensing means for sensing operations of the operation levers and transmitting detection signals to the controller.

17. The hydraulic system for a construction machine according to claim 16, wherein the operation amount sensing means is composed of a pressure sensor.

18. The hydraulic system for a construction machine according to claim 11, wherein the controller senses the operations of the left and right traveling operation levers by detecting the operation amounts through a sensing means for sensing the operation amounts of the left and right traveling operation levers and a sensing means for sensing the operation amount of the actuator operation lever for the first working device, and in the case where the operation of the actuator operation lever for the first working device is sensed, the controller does not output the control signal to the traveling communication valve if the difference between the operation amounts of the left and right traveling operation devices exceeds a set value, while the controller outputs the control signal to the traveling communication valve if the difference between the operation amounts of the left and right traveling operation devices is smaller than the set value.

19. The hydraulic system for a construction machine according to claim 11, wherein the left and right traveling operation levers and the actuator operation lever for the first working device comprise electric operation devices that output electric signals to the controller in proportion to the operation amounts.

20. The hydraulic system for a construction machine according to claim 11, wherein the left and right traveling operation levers and the actuator operation lever for the first working device comprise hydraulic operation devices that output pilot signal pressure in proportion to the operation amounts.

21. A hydraulic system for a construction machine, comprising:
first and second hydraulic pumps connected to an engine;
a left traveling operation lever, a right traveling operation lever, and an actuator operation lever for a second working device outputting an operation signal in proportion to an operation amount by an operator;
a left traveling motor connected to a discharge flow path of the first hydraulic pump to be driven by a first control valve that is shifted by an operation of the left traveling operation lever;
a right traveling motor connected to a flow path that is branched from a discharge flow path of the second hydraulic pump to be driven by a third control valve that is shifted by an operation of the right traveling operation lever;
a hydraulic actuator for a working device connected to the discharge flow path of the second hydraulic pump to be driven by a second control valve that is shifted by an operation of the actuator operation lever for the second working device;
a first pressure compensated valve which is installed on one side of an upper stream and a downstream of the first control valve and of which an opening amount is controlled according to a difference between a maximum load sensing pressure of an actuator connected to the first hydraulic pump and a discharge flow path pressure;
a second pressure compensated valve which is installed on one side of an upper stream and a downstream of the second control valve and of which an opening amount is controlled according to a difference between a maximum load sensing pressure of an actuator connected to the second hydraulic pump and a discharge flow path pressure;
a third pressure compensated valve which is installed on one side of an upper stream and a downstream of the third control valve and of which an opening amount is controlled according to the difference between the maximum load sensing pressure of the actuator connected to the second hydraulic pump and the discharge flow path pressure;
a first orifice connected to a first load sensing line connected to the first pressure compensated valve of the first control valve, and a hydraulic tank;
a second orifice connected to the second pressure compensated valve of the second control valve, a second load sensing line connected to the third pressure compensated valve of the third control valve, and the hydraulic tank;
a confluence valve which is installed in a confluence flow path that connects the discharge flow paths of the first and second hydraulic pumps in parallel, of which an opening amount is controlled according to an operation amount of the traveling operation lever or the actuator operation lever for the second working device, which sums discharge flow rates of the first and second hydraulic pumps, and which makes the first load sensing line and the second load sensing line communicate with each other;
a traveling communication valve installed in a flow path connecting the downstream of the left traveling first pressure compensated valve to the downstream of the right traveling third pressure compensated valve to open or close the flow path by an external control signal; and
a controller controlling the traveling communication valve to shift the flow path to a communication position when a combined operation for simultaneously operating a traveling device and the working device is performed.

22. The hydraulic system for a construction machine according to claim 21, wherein the traveling communication valve is composed of a solenoid valve that is shifted by an electric signal from the controller.

23. The hydraulic system for a construction machine according to claim 21, wherein the traveling communication valve is connected to a solenoid valve that outputs pilot signal pressure that corresponds to the control signal from the controller so that the traveling communication valve is shifted when the pilot signal pressure is supplied.

24. The hydraulic system for a construction machine according to claim 23, wherein the solenoid valve is composed of a valve having characteristics that the solenoid valve is on/off-shifted according to existence/nonexistence of an input of the electric signal.

25. The hydraulic system for a construction machine according to claim 21, wherein the solenoid valve is composed of a valve having characteristics that the solenoid valve outputs pilot pressure in proportion to an input size of the electric signal.

26. The hydraulic system for a construction machine according to claim 21, wherein the left and right traveling operation levers and the actuator operation lever for the second working devices comprise operation amount sensing means for sensing operations of the operation levers and transmitting detection signals to the controller.

27. The hydraulic system for a construction machine according to claim 26, wherein the operation amount sensing means is composed of a pressure sensor.

28. The hydraulic system for a construction machine according to claim 21, wherein the controller senses the operations of the left and right traveling operation levers by detecting the operation amounts through a sensing means for sensing the operation amounts of the left and right traveling operation levers and a sensing means for sensing the operation amount of the actuator operation lever for the second working device, and in the case where the operation of the actuator operation lever for the second working device is sensed, the controller does not output the control signal to the traveling communication valve if the difference between the operation amounts of the left and right traveling operation devices exceeds a set value, while the controller outputs the control signal to the traveling communication valve if the difference between the operation amounts of the left and right traveling operation devices is smaller than the set value.

29. The hydraulic system for a construction machine according to claim 21, wherein the left and right traveling operation levers and the actuator operation lever for the second working device comprise electric operation devices that output electric signals to the controller in proportion to the operation amounts.

30. The hydraulic system for a construction machine according to claim 21, wherein the left and right traveling operation levers and the actuator operation lever for the second working device comprise hydraulic operation devices that output pilot signal pressure in proportion to the operation amounts.
